Europäisches Patentamt

European Patent Office

Office européen des brevets

(19)

(11) Numéro de publication: **0 287 473**
**A1**

## (12) DEMANDE DE BREVET EUROPEEN

(21) Numéro de dépôt: 88400918.4

(22) Date de dépôt: 15.04.88

(51) Int. Cl.⁴: **C 03 B 37/16**

(30) Priorité: 15.04.87 FR 8705366

(43) Date de publication de la demande:
19.10.88 Bulletin 88/42

(84) Etats contractants désignés:
BE CH DE GB IT LI NL

(71) Demandeur: SOURIAU ET CIE
9-13, rue Galliéni
F-92103 Boulogne-Billancourt Cedex (FR)

(72) Inventeur: Bouleti, Gilles
8 rue Voltaire
F-93150 Le Blanc Mesnil (FR)

(74) Mandataire: Fruchard, Guy et al
CABINET BOETTCHER 23, rue la Boétie
F-75008 Paris (FR)

(54) Dispositif pour fracturer une fibre optique.

(57) Le dispositif selon l'invention comporte des moyens de maintien 1,2 pour maintenir la fibre dans une position fixe, des moyens de courbure 3 pour courber la fibre selon un rayon de courbure de fracture, des moyens de traction 4 de la fibre, et des moyens d'amorçage 5 pour assurer une amorce de rupture en un point de fracture de la fibre, il est caractérisé en ce que les moyens de courbure comportent un organe d'appui 3 ayant au moins une surface d'appui disposée en une position intermédiaire entre le point de fracture de la fibre et les moyens de traction et décalée par rapport à une direction axiale de la fibre au niveau des moyens de maintien.

EP 0 287 473 A1

## Description

### Dispositif pour fracturer une fibre optique

La présente invention concerne un dispositif pour fracturer une fibre optique.

On sait que pour avoir une surface terminale présentant de bonnes propriétés de transmission optique à l'extrémité d'une fibre optique, il est nécessaire que cette surface terminale soit plane et perpendiculaire à l'axe de la fibre optique. Pour réaliser une face terminale appropriée à l'extrémité d'une fibre optique, on utilise fréquemment le polissage de l'extrémité de la fibre noyée dans un bloc de résine. Cette opération est longue et onéreuse. De plus, elle peut difficilement être réalisée sur un chantier car elle requiert un outillage lourd et encombrant.

On connaît également des dispositifs, généralement en forme de pince, permettant de fracturer la fibre optique. On sait que ces dispositifs doivent réaliser simultanément une flexion de la fibre, une traction de la fibre, et une amorce de rupture sur la fibre. Si ces trois opérations ne sont pas réalisées convenablement, la face extrême de la fibre fracturée présente des défauts de planéité et n'est pas perpendiculaire à l'axe de la fibre, elle n'est donc pas appropriée à une bonne transmission optique.

En particulier, la flexion de la fibre doit être effectuée selon un rayon de courbure de fracture précis au point de réalisation de l'amorce de rupture. On a envisagé, pour obtenir cette flexion, de mettre la fibre en appui, au niveau du point de fracture, sur une surface présentant un rayon de courbure égal au rayon de rayon de courbure de fracture. Une telle réalisation est toutefois inappropriée lorsque l'on désire effectuer une fracture de la fibre optique au niveau de la face extrême d'un embout supportant la fibre optique car il est alors pratiquement impossible d'amener la surface d'appui exactement tangente à la fibre optique au point où celle-ci sort de l'embout.

Un but de la présente invention est de proposer un dispositif pour fracturer une fibre optique permettant d'obtenir une flexion précise de la fibre optique au point de fracture quelle que soit la position de ce point de fracture par rapport à des moyens de maintien de fibre.

En vue de la réalisation de ce but, on prévoit selon l'invention un dispositif pour fracturer une fibre optique comportant des moyens de maintien pour maintenir la fibre dans une position fixe, des moyens de courbure pour courber la fibre selon un rayon de courbure de fracture, des moyens de traction de la fibre espacés des moyens de maintien, et des moyens d'amorçage pour assurer une amorce de rupture en un point de fracture de la fibre, dans lequel les moyens de courbure comportent un organe d'appui ayant au moins une face d'appui disposée en une position intermédiaire entre le point de fracture de la fibre et les moyens de traction et décalée par rapport à une direction axiale de la fibre au niveau des moyens de maintien.

Ainsi, la flexion de la fibre ne dépend pas de la courbure de la surface d'appui mais de la position de la surface d'apui par rapport aux moyens de maintien et de la tension sur la fibre optique. Le rayon de courbure souhaité au niveau du point de fracture est donc aisément obtenu en agissant sur l'un de ces facteurs.

Selon une version avantageuse de l'invention, l'organe d'appui comprend une portion de cylindre accolée aux moyens de maintien. Ainsi, l'un des paramètres de positionnement de la surface d'appui se trouve prédéterminé lors du montage du dispositif , ce qui simplifie celui-ci, et l'on peut néanmoins modifier le rayon de courbure de la fibre en agissant sur la distance de la surface d'appui par rapport à l'axe de la fibre au niveau des moyens de maintien.

Selon un mode de réalisation préféré de l'invention, l'organe d'appui est disposé pour former une butée pour une extrémité d'un embout dans lequel la fibre est montée. Ainsi, l'extrémité de l'embout se trouve positionnée avec précision par rapport à l'organe d'appui lors de l'introduction de la fibre dans le dispositif.

Selon un autre aspect de l'invention, les moyens d'amorçage comportent un bloc porte-couteau disposé à une première extrémité de deux lames flexibles parallèles ayant une seconde extrémité fixée sur un support, et un couteau monté sur le bloc porte-couteau pour s'étendre perpendiculairement au plan des lames et parallèlement à une direction longitudinale de celles-ci Ainsi le couteau se déplace aisément selon une direction perpendiculaire au plan des lames mais il est supporté rigidement selon une direction parallèle au plan des lames de sorte qu'il crée une amorce de rupture en un point précis de la fibre optique. De préférence, le couteau est adjacent aux moyens de maintien. Ainsi, dans le cas où l'extrémité d'un embout coïncide avec le côté des moyens de maintien, après fracture, la face terminale de la fibre optique coïncide exactement avec l'extrémité de l'embout.

Selon encore un autre aspect de l'invention, les moyens de traction comportent un premier et un second organe de traction montés sur un support mobile et comportant des parties de serrage en regard venant en appui l'une contre l'autre pour une position de repos des moyens de traction, au moins le premier organe de traction comporte une partie flexible, et le dispositif comporte une butée en regard de la partie flexible du premier organe de traction. Ainsi, lorsque le premier organe de traction est amené en butée, la déformation de la partie flexible provoque un écartement des parties de serrage et il est possible d'insérer la fibre optique entre celles-ci puis d'exercer une traction sur la fibre optique en écartant le premier organe de traction de la butée en regard.

D'autres caractéristiques et avantages de l'invention apparaîtront encore à la lecture de la description qui suit d'un mode de réalisation particulier non limitatif en liaison avec les dessins ci-joints parmi lesquels :
- la figure 1 est une vue en élévation du dispositif selon l'invention,

- la figure 2 est une vue en coupe selon la ligne II-II de la figure 1,

- la figure 3 est une vue en coupe partielle très agrandie selon la ligne III-III de la figure 2,

- la figure 4 est une vue de côté des parties représentées sur la figure 3,

- la figure 5 est une représentation schématique du dispositif dans une position de réception d'une fibre.

- la figure 6 est une représentation schématique de l'invention dans une position de traction de la fibre.

En référence aux dessins, le dispositif pour fracturer une fibre optique selon l'invention comporte une plaque de base 1 formant une poignée de préhension sur laquelle sont montés des moyens de maintien généralement désignés en 2 pour maintenir la fibre dans une position fixe, des moyens de courbure 3 pour courber la fibre selon un rayon de courbure de fracture, des moyens de traction de la fibre généralement désignés en 4 espacés des moyens de maintien 2, et des moyens d'amorçage généralement désignés en 5 pour assurer une amorce de rupture en un point de fracture de la fibre.

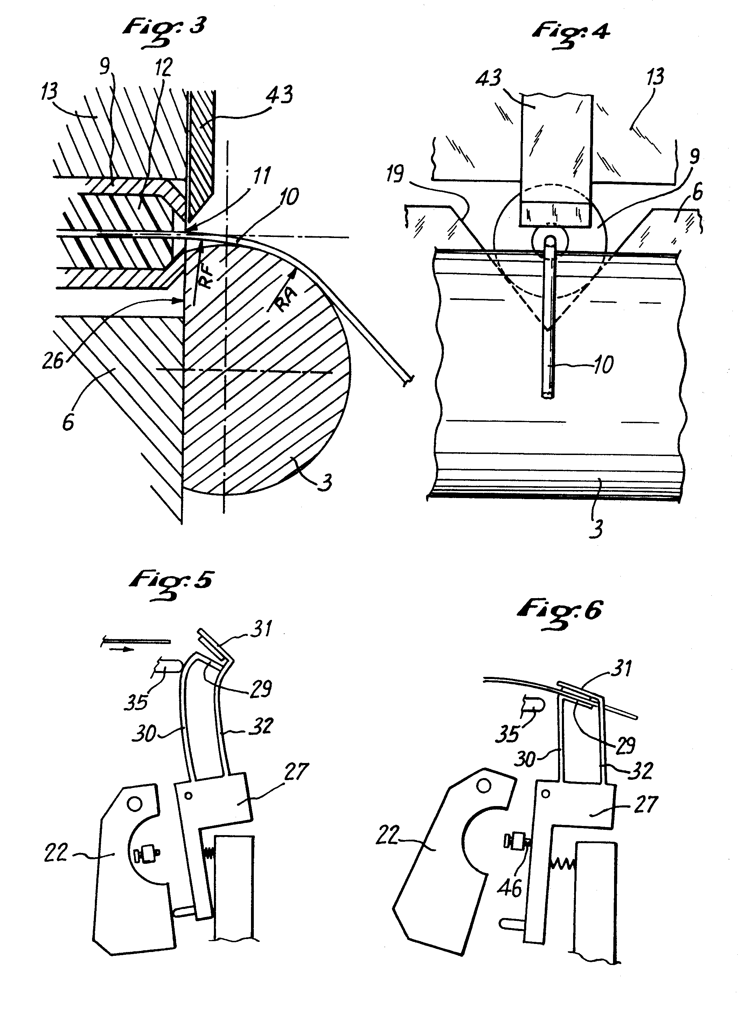

Les moyens de maintien comprennent un mors fixe 6 fixé à la plaque de base 1 et comportant une découpe 7 permettant le passage de la collerette 8 d'un embout 9 dans lequel est montée une fibre optique 10 dont une partie s'étend au-delà d'une extrémité 11 de l'embout. D'une façon connue en soi, la fibre 10 est emprisonnée dans l'embout 9, par exemple en étant noyée dans de la résine 12. Au-dessus du mors fixe 6, les moyens de maintien comprennent un mors mobile 13 associé à des colonnettes 14 montées pour coulisser dans des alésages 15 d'une potence 16 solidaire de la plaque de base 1. Le mors mobile 13 est rappelé vers le mors fixe 6 par des ressorts 17. A sa partie inférieure, le mors mobile 13 comporte une découpe 18 pour le passage de la collerette 8 de l'embout 9. Afin de mieux maintenir en place l'embout 9, le mors fixe 6 comporte de préférence une encoche en V 19 (figure 4). Le mors mobile 13 est déplacé par l'une des branches 20 d'un étrier mobile 21 en forme de U qui s'appuie à la partie inférieure sur un levier de manoeuvre mobile 22 montée pour pivoter sur la plaque de base 1 autour d'un axe 23. L'étrier 21 est rappelé vers la poignée de manoeuvre 22 par un ressort 24 disposé entre le côté d'une plaque 25 fixé à la plaque de base 1 et la branche inférieure de l'étrier 21.

Les moyens de courbure de la fibre 10 selon un rayon de courbure de fracture comprennent un organe d'appui 3 formé par une portion de cylindre légèrement supérieure à un demi-cylindre accolée au mors 6. Le bord supérieur de la portion de cylindre 3 est décalé vers le bas par rapport à une direction axiale de la fibre 10 au niveau de l'embout 9, c'est-à-dire au niveau des moyens de maintien. La portion de cylindre 3 comporte une face plane 26 qui forme une butée pour l'extrémité de l'embout 9 lorsque celui-ci est inséré dans l'encoche en V 19 du mors fixe 6. La partie cylindrique de la surface externe de la portion de cylindre 3 forme une face d'appui pour la partie de fibre optique 10 qui s'étend au-delà de l'extrémité de l'embout 9.

Les moyens de traction 4 de la fibre optique comprennent un support mobile 27 monté pour pivoter sur un axe 28, un premier organe de traction formé par une lame flexible coudée comportant une première branche 29 et une seconde branche 30, un second organe de traction formé par une lame flexible coudée comportant une première branche 31 et une seconde branche 32. Les premières branches 29, 31 forment des parties de serrage en regard et venant en appui l'une contre l'autre pour une position de repos des moyens de traction tandis que les secondes branches sont montées de façon espacée, parallèles l'une à l'autre sur le support mobile 27. De préférence, l'une des parties de serrage, ici la branche 31, comporte un revêtement anti-dérapant 33 formé par exemple par une feuille de caoutchouc disposée en regard de l'autre partie de serrage. Les parties de serrage 29, 31, sont espacées des moyens de maintien 2 et sont décalées par rapport à l'axe de la fibre optique 10 au niveau de l'embout 9 de sorte que la face d'appui de l'organe d'appui 3 se trouve disposée en une position intermédiaire entre le point de fracture de la fibre, ici l'extrémité de l'embout 9, et les moyens de traction 4. Une plaque inclinée 34 est de préférence disposée entre les moyens de maintien 2 et les parties de serrage 29, 31 pour guider l'extrémité de la fibre optique 10 vers les parties de serrage 31, 32 lors de l'introduction de la fibre dans le dispositif. En regard de la seconde branche 30 du premier organe de traction, le dispositif comporte une butée 35 portée par un bloc 36 fixé de façon appropriée à la plaque de base 1. Le support mobile 27 est rappelé vers la position de repos par des moyens à élastiques formés par un ressort 37 maintenu en compression par une vis 38 portée par la plaque de base 1. A sa partie inférieure, le support mobile 27 porte un ergot de manoeuvre 39 sur lequel le levier de manoeuvre 22 peut prendre appui. Du côté opposé au ressort 37 par rapport au support mobile 27, la plaque de base 1 comporte un plot 45 fixé de façon appropriée à celle-ci et dans lequel est montée une vis de réglage de traction 46 ayant une extrémité tournée vers le support 27.

Les moyens d'amorçage 5 comprennent un bloc porte-couteau 40 disposé à une première extrémité de deux lames flexibles parallèles 41 ayant une seconde extrémité fixée à un support 42 lui-même fixé de façon appropriée à la plaque de base 1. Un couteau 43 est monté sur un côté du bloc porte-couteau 40 tourné vers le mors mobile 13. Le couteau 43 s'étend perpendiculairement au plan des lames flexibles 41 et parallèlement à une direction longitudinal de celles-ci. L'ensemble du porte-couteau et du couteau qui lui est associé est donc mobile selon une direction perpendiculaire à l'axe longitudinale de la fibre optique 10 au niveau de l'extrémité de l'embout 9 et est maintenu dans une position fixe selon une direction axiale de la fibre optique 10. Le couteau 43 est disposé au-dessus de l'organe d'appui 3 et est adjacent aux moyens de maintien 2. Lors d'un mouvement vers le bas, le biseau du couteau 43 attaque donc la fibre optique 10 en un point très voisin de l'extrémité de l'embout 9. Le bloc porte-couteau 40 est déplacé dans une direction perpendiculaire à l'axe de la fibre optique au moyen d'une seconde branche 44 de l'étrier 21 qui s'étend en porte à faux sous la lame flexible 41 inférieure.

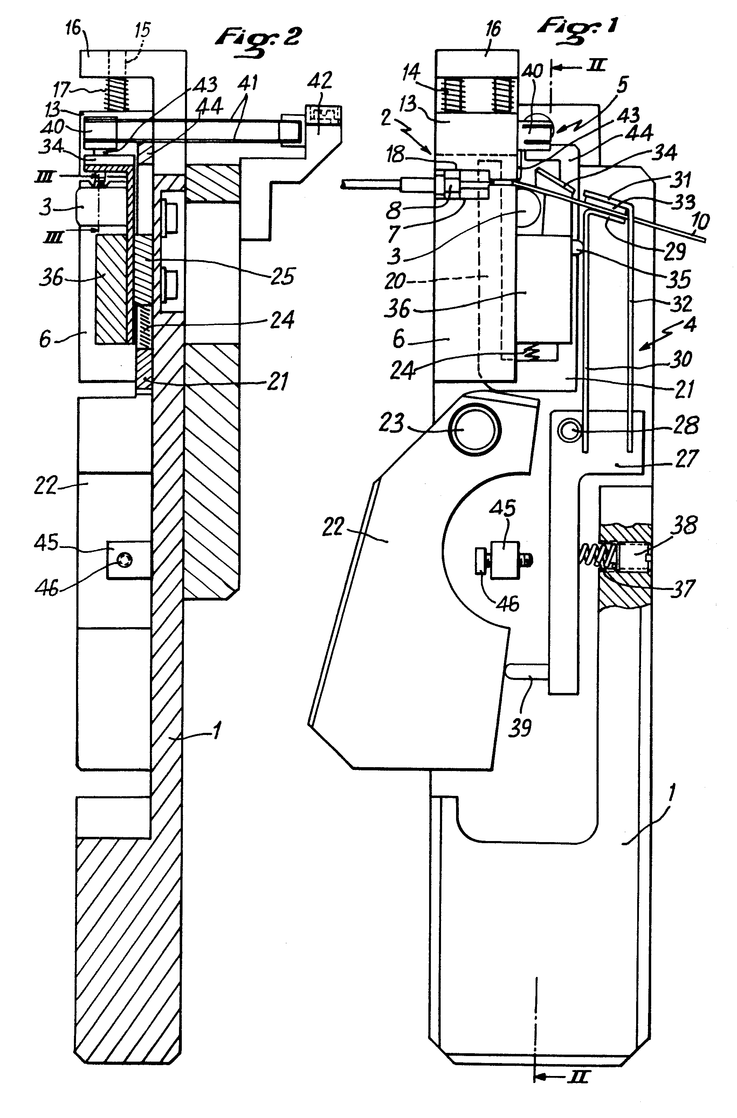

Le dispositif selon l'invention fonctionne de la façon suivante : avant engagement de la fibre optique 10 dans le dispositif, le levier de manoeuvre 22 est déplacé pour amener la branche 30 du premier organe de traction en appui prononcé sur la butée 35 afin de déformer par flexion la branche 30 comme illustré sur la figure 5. Dans ce mouvement, l'étrier 21 est simultanément déplacé vers le haut de sorte que sa branche 20 repousse le mors mobile 13 et sa branche 44 repousse le couteau 43 vers le haut. La déformation de la branche 30 du premier organe de traction provoque un écartement entre les parties de serrage 29 et 31 et la fibre optique peut donc être introduite dans le dispositif jusqu'à ce que l'embout 9 vienne en butée contre la face plane de l'organe d'appui 3. A ce propos on notera que la branche 32 des moyens de traction comporte de préférence une ouverture (non représentée) permettant le passage de la fibre 10 afin que celle-ci puisse s'étendre au-delà de la branche 32. Le levier de manoeuvre 22 est ensuite relâché progressivement et revient vers une position de repos sous l'action des ressorts 24 et 37. Pendant ce mouvement de retour, l'étrier 21 descend tout d'abord jusqu'à une position où le mors mobile 13 est en contact avec l'embout 9 de sorte que celui-ci est fermement maintenu dans le dispositif. Simultanément, le support mobile 27 revient jusqu'à une position représentée sur la figure 1 où la branche 30 des moyens de traction est juste en contact avec la butée 35 mais n'est plus déformée et où les parties de serrage 29, 31 sont donc appliquées de part et d'autre de la fibre optique 10 qui se trouve ainsi pincée entre les parties de serrage 29, 31. Lors de la poursuite du mouvement du levier de manoeuvre 22 vers la position de repos, le dispositif prend la position représentée sur la figure 6 c'est-à-dire que le support mobile 27 vient en butée contre la vis de réglage de traction 46. Dans cette position, la fibre optique a, au voisinage de l'extrémité de l'embout 9, une flexion dont le rayon de courbure RF est fonction du décalage de la surface d'appui 3 par rapport à l'axe de la fibre optique 10 au niveau de l'extrémité de l'embout 9. On notera que le rayon de courbure RF sera généralement différent du rayon de courbure RA de la surface d'appui 3. Le levier de manoeuvre 22 continue ensuite à être relâché jusqu'à ce que l'étrier 21 redescende sur une distance suffisante pour que le couteau 43 entre en contact avec la fibre optique 10. Dans cette position, les trois conditions de fracture sont réunies et la fibre optique 10 est donc fracturée à proximité de l'extrémité de l'embout 9. On notera à ce propos que la longueur de la branche 44 de l'étrier 21 sera aisément déterminée pour que la fibre optique soit en traction au moment où le couteau 43 entre en contact avec la fibre optique 10.

On remarquera que dès l'instant où la branche 30 du premier organe de traction quitte l'appui sur la butée 35, la fibre 10 est pincée entre les parties de serrage 29 et 31. Lorsque le ressort 37 repousse le support mobile 27, les branches 30 et 32 fléchissent donc comme représenté de façon volontairement exagérée sur la figure 6. C'est cette flexion, qui s'effectue sans aucun frottement, qui détermine la force de traction à laquelle est soumise la fibre 10. Par le réglage de la vis 46, on détermine la position finale du support mobile 27 et donc la flexion des branches 30 et 32. La force de traction sur la fibre 10 est donc bien réglée par la vis 46. A ce propos on remarquera que les lames support du couteau 43 et les lames flexibles des moyens de traction fonctionnent de la même façon et constituent à chaque fois un équipage léger dont les déplacements s'effectuent sans frottement et qui est mobile selon la direction souhaitée mais rigide selon une direction perpendiculaire.

On remarquera également (voir figure 5) que, de préférence, le bloc de résine 12 ne s'étend pas jusqu'à l'extrémité 11 de l'embout 9 de sorte qu'une partie de la fibre 10 reste libre à l'intérieur de l'embout. Lors de la traction de la fibre 10, cette partie libre s'allonge très légèrement (de l'ordre de quelques microns). On prévoiera avantageusement que cet allongement corresponde au très faible espace qui sépare le couteau 43 de l'extrémité 11 de l'embout 9. Ainsi, lorsque la fibre 10 est fracturée, au point de contact du couteau 43, elle n'est plus soumise à une traction et se rétracte de façon telle que sa face extrême coïncide exactement avec l'extrémité de l'embout de sorte que l'on obtient une excellente transmission optique.

Bien entendu, l'invention est susceptible de variantes de réalisation qui apparaîtront à l'homme de métier. En particulier, bien que la structure particulière des moyens de courbure selon l'invention ait été décrite en liaison avec une structure particulière des moyens de traction et des moyens d'amorçage, les moyens de courbure selon l'invention pourront être utilisés en combinaison avec des moyens de traction et des moyens d'amorçage ayant une structure différente. De plus, bien que dans le mode de réalisation illustré les deux organes de traction soient réalisés sous forme d'une lame flexible coudée, on peut prévoir des dispositifs comportant une seule partie flexible. Dans ce cas, l'écart entre les parties de serrage 29 et 31 lors de l'ouverture dépendra seulement de la déformation de la branche 30 alors que dans le cas illustré, la partie de serrage 29 prend appui sur la branche 32 du second organe, ce qui augmente l'écart entre les parties de serrage 29 et 31.

## Revendications

1. Dispositif pour fracturer une fibre optique (10) comportant des moyens de maintien (2) pour maintenir la fibre dans une position fixe, des moyens de courbure (3) pour courber la fibre selon un rayon de courbure de fracture, des moyens de traction (4) de la fibre espacés des moyens de maintien, et des moyens d'amorçage (5) pour assurer une amorce de rupture en un point de fracture de la fibre caractérisé en ce que les moyens de courbure comportent un organe d'appui (3) ayant au moins une face d'appui disposée en une position intermédiaire entre le point de fracture de la fibre et les moyens de traction (4) et décalée par rapport à une direction axiale de la fibre (10) au niveau des moyens de maintien (2).

2. Dispositif selon la revendication 1 caractérisé en ce que l'organe d'appui (3) comprend une portion de cylindre accolée aux moyens de maintien (2).

3. Dispositif selon la revendication 2 caractérisé en ce que l'organe d'appui (3) est disposé pour former une butée pour une extrémité d'un embout (9) dans lequel la fibre (10) est montée.

4. Dispositif selon l'une des revendications 1 à 3 caractérisé en ce que les moyens d'amorçage comportent un bloc porte-couteau (40) disposé à une première extrémité de deux lames flexibles (41) parallèles ayant une seconde extrémité fixée sur un support (42), et un couteau (43) monté sur le bloc porte-couteau (40) pour s'étendre perpendiculairement au plan des lames (41) et parallèlement à une direction longitudinale de celles-ci.

5. Dispositif selon la revendication 4 caractérisé en ce que le couteau (43) est adjacent aux moyens de maintien (2).

6. Dispositif selon l'une des revendications 1 à 5 caractérisé en ce que les moyens de traction comportent un premier et un second organes de traction montés sur un support mobile (27) et comportant des parties de serrage (29,31) en regard venant en appui l'une contre l'autre pour une position de repos des moyens de traction, en ce qu'au moins le premier organe de traction comporte une partie flexible (30), et en ce que le dispositif comporte une butée (35) en regard de la partie flexible (30) du premier organe de traction.

7. Dispositif selon la revendication 6 caractérisé en ce que les deux organes de traction sont flexibles.

8. Dispositif selon la revendication 7 caractérisé en ce que les organes de traction sont des lames flexibles coudées ayant des premières branches (29, 31) venant en appui l'une contre l'autre pour une position de repos, et des secondes branches (30,32) montées de façon espacée parallèles l'une à l'autre sur le support mobile (27).

9. Dispositif selon l'une des revendications 6 à 8 caractérisé en ce que le support mobile (27) est rappelé vers la position de repos par des moyens élastiques (37).

10. Dispositif selon la revendication 9 caractérisé en ce qu'il comporte une butée de réglage de traction (46) disposée en regard du support mobile (27).

0287473

**Fig: 3**

**Fig: 4**

**Fig: 5**

**Fig: 6**

Office européen
des brevets

# RAPPORT DE RECHERCHE EUROPEENNE

Numero de la demande

EP  88 40 0918

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 021 094  (BOWTHORPE-HELLERMAN) <br> * En entier * <br> --- | 1,2,6 | C 03 B   37/16 |
| A | US-A-4 017 013  (HAWK) <br> * En entier * <br> --- | 1 | |
| A | DE-B-3 015 645  (SIEMENS) <br> * En entier * <br> ----- | 1 | |

DOMAINES TECHNIQUES RECHERCHES (Int. Cl.4)

C 03 B   37/16
B 26 F    3/00
B 23 D   31/00
B 26 D    3/00
G 02 B    6/00

Le présent rapport a été établi pour toutes les revendications

| Lieu de la recherche | Date d'achèvement de la recherche | Examinateur |
|---|---|---|
| LA HAYE | 28-06-1988 | VAN DEN BOSSCHE W.L. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)